# EUROPÄISCHE PATENTANMELDUNG

(11) **EP 3 696 247 A1**
(43) Veröffentlichungstag der Anmeldung: **19.08.2020**
(21) Anmeldenummer: 19157770.9
(22) Anmeldetag: 18.02.2019
(51) Int. Cl.: C09K 11/77, G01T 1/20, C03C 3/064, G01T 1/202, G01T 1/29, G21K 4/00, C03B 19/06, C03B 19/09, C03B 19/10, C03C 3/068, C03C 3/095, C03C 4/12, C03B 1/00

(54) **SZINTILLATORGLAS UND VERFAHREN ZU DESSEN HERSTELLUNG**

(71) Anmelder: Siemens Healthcare GmbH, 91052 Erlangen (DE)
(72) Erfinder: Rossner, Wolfgang, 83607 Holzkirchen (DE); Schuh, Carsten, 85598 Baldham (DE); Metzger, Wilhelm, 81829 München (DE)

(57) **Zusammenfassung**

Es wird ein Verfahren zur Herstellung von Szintillatorglas (2) beschrieben. Bei dem Verfahren wird eine Rohmaterialpulvermischung (RM) durch Zerkleinern und Mischen folgender Ausgangsmaterialien (AM) erzeugt. Die Ausgangsmaterialien (AM) umfassen eine Verbindung mit Cer, ein Verflüssigungsmittel, ein Material mit hoher Röntgenabsorption und einen Glasbildner. Weiterhin wird eine Schmelze (S) durch Schmelzen der Rohmaterialpulvermischung (RM) erzeugt. Anschließend wird abgeschrecktes Glaspulver (GP) durch ultraschnelles Abkühlen der erzeugten Schmelze (S) hergestellt. Nachfolgend erfolgt ein Zerkleinern des abgeschreckten Glaspulvers (GP). Das zerkleinerte Glaspulver (ZGP) wird danach zu einem Pulverpresskörper (PPK) verpresst. Weiterhin wird kompaktes Glasmaterial (KGM) durch Sinterschmieden des Pulverpresskörpers (PPK) erzeugt. Schließlich erfolgt ein Tempern des kompakten Glasmaterials (KGM). Weiterhin wird eine Herstellungseinrichtung (30) zum Herstellen eines Szintillatorglases (2) beschrieben. Es wird auch ein Szintillatorglas (2) beschrieben. Außerdem wird ein Strahlendetektor (40) beschrieben. Es wird überdies ein Tomographiesystem (50) beschrieben.

## Beschreibung

Die Erfindung betrifft ein Verfahren zur Herstellung von Szintillatorglas. Weiterhin betrifft die Erfindung eine Szintillatorglas-Herstellungseinrichtung. Überdies betrifft die Erfindung ein Szintillatorglas. Ferner betrifft die Erfindung einen Strahlendetektor. Außerdem betrifft die Erfindung ein Tomographiesystem.

Mit Hilfe moderner bildgebender Verfahren werden häufig zwei- oder dreidimensionale Bilddaten erzeugt, die zur Visualisierung eines abgebildeten Untersuchungsobjekts und darüber hinaus auch für weitere Anwendungen genutzt werden können.

Häufig basieren die bildgebenden Verfahren auf der Erfassung von energiereicher Strahlung. Beispiele hierfür sind die Computertomographie (CT), die Positron-Emission-Tomographie (PET) und die Einzel-Photon-Emission-Computertomographie (SPECT). Bei den genannten Verfahren kommen Detektoren als Strahlendetektoren zum Einsatz. Diese Detektoren können als Szintillator-Detektoren oder Detektoren mit Direktkonvertern ausgebildet sein. Als Strahlendetektor soll im Folgenden jede Art von Detektor verstanden werden, der ionisierende Strahlung, insbesondere aber Röntgenstrahlen oder Gammastrahlen erfasst.

Szintillator-Detektoren messen die Energie und Intensität von ionisierender Strahlung. In einem Szintillator werden durch ionisierende Strahlung Lichtblitze ausgelöst, deren Anzahl von der Energie der einfallenden Strahlung abhängt. Diese Lichtblitze setzen beispielsweise aus einer Photokathode eines hinter dem Szintillator angebrachten Photomultipliers Elektronen frei. Die Elektronen werden durch Stöße an den Elektroden im Photomultiplier lawinenartig vervielfacht. An der Anode kann dann ein gut messbarer Stromimpuls abgenommen werden, dessen Amplitude von der Energie der einfallenden Strahlung abhängig ist.

Die meisten kommerziell angewendeten Szintillatoren basieren auf monokristallinen oder polykristallinen Materialien, welche mehr oder weniger komplexe Metalloxide, wie zum Beispiel Lu₂SiO₅:Ce umfassen. Die Produktion solcher Szintillatoren basiert auf Hochtemperaturprozessen zur Erzeugung von Kristallwachstum oder auf Keramiksinterprozessen mit Temperaturen bis über 2000°C. Die genannten Prozesse sind energieaufwendig und kostenintensiv. Beispielsweise wird das Ziehen eines Einkristalls bei Temperaturen von 2000°C durchgeführt und aufgrund von Gradienten der Zusammensetzung ist nur ein Teil des erzeugten Kristallkörpers nutzbar. Die Herstellung von Keramiken umfasst Prozesse mit vielen Schritten, wie zum Beispiel die Pulversynthese bis zum Sintern auf 2000°C. Die verwendeten Materialien, wie zum Beispiel Lu₂O₃ sind zudem sehr teuer. Ein Ansatz zur Reduktion von Aufwand und Kosten besteht darin, Szintillatoren aus Glas herzustellen.

Eine solche Vorgehensweise ist in US 4,566,987 beschrieben. Allerdings erfüllen die dort beschriebenen Materialien nicht alle Anforderungen für den Einsatz in PET-Detektoren, insbesondere, was die Abklingkonstante und die Lichtemissionseffizienz unter Hochenergieanregung betrifft. Die in US 4,566,987 beschriebenen Gläser weisen spezielle Zusammensetzungen mit Ce³⁺-aktiviertem Glas auf. Die Gläser weisen als Materialien Cer, Phosphor und Bariumsilikat auf. Die zur Herstellung dieser Gläser eingesetzten Verfahren basieren auf herkömmlichen Produktionsprozessen und Werkzeugen, wie zum Beispiel Platinschmelztiegeln.

Grundsätzlich sind lichtemittierende Gläser schon lange bekannt. In den achtziger Jahren wurden von der Firma Schott Szintillationsgläser für medizinische bildgebende Anwendungen entwickelt. Ein als HED-1 bezeichnetes Glas wies Ce³⁺-Ionen als Aktivatoren auf und als SCGF-C bzw. SF5 bezeichnete Gläser wiesen Tb³⁺-Ionen als Aktivatoren auf. Um das Jahr 2000 wurden von Schott glasbasierte Wellenlängenkonverter für LEDs mit weißem Licht hergestellt.

Ebenso wurden von der Firma St. Gobain Glass-Szintillator-Materialien aus Lithiumsilikat entwickelt, welche hauptsächlich für Neutronendetektoren und Partikeldetektoren konzipiert wurden und nicht für PET-Systeme geeignet sind.

Es besteht mithin das Problem, ein Herstellungsverfahren zu finden, welches die Herstellung von Szintillatoren, insbesondere für PET-Systeme und SPECT-Systeme, erleichtert und diese kostengünstiger macht.

Diese Aufgabe wird durch ein Verfahren zur Herstellung von Szintillatorglas gemäß Patentanspruch 1, eine Szintillatorglas-Herstellungseinrichtung gemäß Patentanspruch 14, ein Szintillatorglas gemäß Patentanspruch 15, einen Strahlendetektor gemäß Anspruch 16 und ein Tomographiesystem gemäß Patentanspruch 17 gelöst.

Bei dem erfindungsgemäßen Verfahren zur Herstellung von Szintillatorglas wird eine Rohmaterialmischung durch Zerkleinern und Mischen folgender anorganischer Ausgangsmaterialien erzeugt:
- einer Verbindung mit Cer,
- eines Verflüssigungsmittels,
- eines Materials mit hoher Röntgenabsorption und
- eines Glasbildners.

Der Zerkleinerungsprozess kann zum Beispiel in einer Attritormühle erfolgen. Dabei werden die Ausgangsmaterialien feinst gemahlen, bis die Partikelgröße unter 200 nm liegt und die einzelnen Materialien teilweise röntgenamorph sind. Röntgenamorphe Materialien liefern im Vergleich zu röntgenkristallinen Materialien stark verbreiterte Röntgenreflexe bzw. diffuse Beugungsmuster. Es wird vorzugsweise ein möglichst feines Pulver erzeugt, um die Reaktivität der einzelnen Partikel zu erhöhen und damit den Schmelzprozess zu erleichtern.

Die Verwendung von Cer ist dadurch bedingt, dass sich dreiwertige Cer-Ionen als Aktivatorzentren eignen. Die Aktivatorzentren spielen bei dem Szintillationsprozess eine wichtige Rolle. Im Rahmen eines solchen Vorgangs erzeugt ionisierende Strahlung freie Elektronen, Löcher oder Elektronen-Lochpaare. Diese wandern durch das Szintillatormaterial, bis sie auf ein Aktivatorzentrum treffen. Das Aktivatorzentrum wird dadurch angeregt und fällt unter Emission von Licht in seinen Grundzustand zurück.

Damit der Szintillator ausreichend durchlässig für das emittierte Licht ist, wird ein Glasbildner als transparentes Material genutzt. Das Verflüssigungsmittel dient zur Erniedrigung der nominell hohen Schmelzpunkte der Rohstoffkomponenten und zur Homogenisierung der nachfolgend beschriebenen Schmelze, um gleichmäßige physikalische Eigenschaften zu erhalten.

Das Material mit hoher Röntgenabsorption ermöglicht die effektivere Absorption der Röntgen- bzw. Gammaenergie der auf den Szintillator auftreffenden Röntgen bzw. Gammastrahlung und ist damit relevant für die Sensitivität des Szintillators.

Durch Schmelzen der Rohmaterialpulvermischung unter reduzierenden Bedingungen, vorzugweise in Formiergas, wird in einem nachfolgenden Verfahrensschritt eine Schmelze erzeugt. Formiergas besteht aus Wasserstoff und Stickstoff mit 5-10 Vol.-% Wasserstoff. Bei diesem Vorgang erfolgt bei einem Einsatz einer Verbindung mit dreiwertigem Cer als Ausgangsmaterial, wie zum Beispiel Cercarbonat, zunächst die Bildung von vierwertigen Cer-Ionen, da sich das vorgegebene dreiwertige Cer in Cercarbonat während des Aufheizvorganges des Schmelzens unter Bildung von vierwertigen Cer-Ionen zu Ceroxid zersetzt. Anschließend erfolgt eine Reduktion der vierwertigen Cer-Ionen zu dreiwertigen Cer-Ionen durch den Wasserstoff des Formiergases.

Vierwertige Cer-Ionen sind bevorzugte Haftstellen für Elektronen der durch Anregung mit Hochenergiephotonen erzeugten Elektronen-Loch-Paare und verzögern die Emission zeitlich.

Damit erhöht sich die Wahrscheinlichkeit der nichtstrahlenden Rekombination von angeregten Elektronen und Löchern, was eine Reduktion der Emissionseffizenz mit sich bringt. Folglich ist es wichtig, möglichst geringe Konzentrationen an vierwertigen Cer-Ionen im Endprodukt zu haben.

Der Schmelzprozess erfolgt daher vorzugsweise in einem Graphittiegel unter reduzierender Atmosphäre unter Anwendung von Formiergas. Vorteilhaft werden dabei Ce⁴⁺-Ionen zu Ce³⁺-Ionen reduziert. Der Schmelzvorgang findet zunächst bei Temperaturen von 1800 bis 2100 °C, vorzugsweise 1990°C bis 1950 °C statt. Nach etwa 30 Minuten wird auf 1500 °C bis 1700 °C, vorzugsweise 1600 °C abgekühlt und diese Temperatur etwa 6 Stunden beibehalten, um das Gemenge vollständig zu schmelzen.

Anschließend wird abgeschrecktes Glaspulver durch ultraschnelles Abkühlen der erzeugten Schmelze erzeugt. Durch den ultraschnellen Abkühlungsprozess soll ein Umlagern der gemischten Materialien und damit der amorphe Zustand erhalten bleiben, so dass ein homogenes Pulver entsteht. Insbesondere soll durch das schnelle Abkühlen auch eine teilweise Kristallisation der Glasschmelze verhindert werden. Eine durch eine teilweise Kristallisation verursachte Entglasung würde zu optischen Defekten, Streuzentren und inneren Spannungen im Glas führen, wodurch sogar ein Zerspringen des Glases verursacht werden könnte.

Das abgeschreckte Glaspulver wird zerkleinert und anschließend zu einem Pulverpresskörper verpresst. Bei diesem Prozess kann wieder eine Attritormühle zum Einsatz kommen. Durch das Verpressen entsteht ein Pulverpresskörper, der sich aufgrund seiner Kompaktheit und Festigkeit für den nachfolgenden Sinterprozess gut eignet.

Das Verpressen des Glaspulvers kann einachsig bei Drücken von 50 bis 100 MPa oder isostatisch bei 1000 bis 2000 bar erfolgen. Die dabei entstehenden zylindrischen quaderförmigen Formen können durch Pressdichten auf 45 % bis 55 % relative Dichte verdichtet werden.

Schließlich wird ein kompaktes Glasmaterial durch Vakuum-Sinterschmieden des komprimierten Pulvers hergestellt. Mit Hilfe des Vakuum-Sinterschmiedens werden noch vorhandene Poren aus dem Material entfernt, so dass ein dichter Glaskörper entsteht. Das zu Presskörpern komprimierte Glaspulver wird in einer Heißpresse in Graphitmatrizen unter Vakuum bei Temperaturen zwischen 1200 °C und 1500 °C, vorzugsweise bei 1400°C bis 1450 °C, unter einem einachsigen Druck bei einem stufenweisen Druckaufbau bis maximal 20 bis 80 MPa, vorzugsweise 50 bis 60 MPa, durch Sintern mittels viskosem Fließen verdichtet. Der Sinterglaskörper wird bei Maximaltemperatur etwa 30 bis 120 Minuten unter Druck gehalten und danach schrittweise entlastet und durch Abschalten der Ofenheizung so schnell wie möglich abgekühlt.

Schließlich erfolgt zur Ausbildung einer verbesserten Nahordnung des Glasmaterials ein Tempern des Sinterglases, vorzugsweise in Formiergas oder Schutzgas, bei 400 °C bis 800 °C. Dieser Vorgang kann etwa 1 bis 10 Stunden in Anspruch nehmen. Dadurch wird eine Verbesserung des Szintillationsverhaltens erreicht, indem die Halbwertsbreite der Emissionsbande abnimmt und ebenso die Halbwertsbreite des Energiespektrums abnimmt und damit die Szintillationseffizienz ansteigt, da die Szintillationsprozesse im Ce³⁺-Ion durch das Kristallfeld der Nahordnung stark beeinflusst werden. Die Nutzung von Schutzgas, welches Argon und Stickstoff umfasst, oder von Formiergas bewirkt eine Reduktion eventuell noch vorhandener Ce⁴⁺-Ionen bzw. verhindert das Neubilden derartiger Ionen.

Das durch das erfindungsgemäße Verfahren hergestellte Szintillatorglas erreicht eine hohe Transparenz und eine geringe Porosität. Das erzeugte Szintillatorglas eignet sich auch für PET- oder SPECT-Anwendungen. Denn das mit dem erfindungsgemäßen Verfahren erzeugte Szintillatorglas weist eine hohe Strahlenabsorptionsfähigkeit, eine niedrige Abklingkonstante und einen hohen Wirkungsgrad der Konversion von Strahlungsquanten in sichtbare Photonen auf. Im Vergleich zu Einkristallszintillatormaterialien oder Keramik-Szintillatormaterialien lässt sich ein amorphes Szintillatormaterial zudem mit weniger Energieaufwand und höherer Ausbeute und damit kostengünstiger herstellen.

Die erfindungsgemäße Szintillatorglas-Herstellungseinrichtung weist eine Mischungseinheit zum Erzeugen einer Rohmaterialmischung durch Zerkleinern und Mischen folgender anorganischer Ausgangsmaterialien auf:
- einer Verbindung mit Cer,
- eines Verflüssigungsmittels,
- eines Materials mit hoher Röntgenabsorption und
- eines Glasbildners.
Teil der erfindungsgemäßen Szintillatorglas-Herstellungseinrichtung ist auch eine Schmelzeinheit zum Erzeugen einer Schmelze durch Schmelzen der Rohmaterialpulvermischung. Zudem umfasst die erfindungsgemäße Szintillatorglas-Herstellungseinrichtung eine Abkühleinheit zum Erzeugen von abgeschrecktem Glaspulver durch ultraschnelles Abkühlen der erzeugten Schmelze. Weiterhin umfasst die erfindungsgemäße Szintillatorglas-Herstellungseinrichtung eine Pulverisierungseinheit zum Zerkleinern des abgeschreckten Glaspulvers. Überdies umfasst die erfindungsgemäße Szintillatorglas-Herstellungseinrichtung eine Kompressionseinheit zum Komprimieren des zerkleinerten Glaspulvers und eine Sintereinheit zum Erzeugen eines kompakten Glasmaterials durch Sinterschmieden des komprimierten Glaspulvers. Die erfindungsgemäße Szintillatorglas-Herstellungseinrichtung weist auch eine Tempereinheit zum Tempern des kompakten Glasmaterials auf. Die erfindungsgemäße Szintillatorglas-Herstellungseinrichtung teilt die Vorteile des erfindungsgemäßen Verfahrens zur Herstellung von Szintillatorglas.

Das erfindungsgemäße Szintillatorglas weist als Komponenten auf: Ceroxid, Bariumoxid, Magnesiumoxid, Lanthanoxid und/oder Gadoliniumoxid sowie Lithiumtetraborat. Das erfindungsgemäße Szintillatorglas weist die im Zusammenhang mit dem Herstellungsverfahren genannten Vorteile auf. Cer ist als dreiwertiges Element gut geeignet zur Photonenemission in dem Szintillatorglas. Barium und die Lanthanoide Lanthan und Gadolinium weisen überdies eine hohe Röntgenabsorptionsfähigkeit auf. Gadolinium führt zu einem erhöhten Energietransfer der absorbierten Röntgen- oder Gammastrahlung. Siliziumoxid bildet die Glasmatrix des Szintillatorglases.

Der erfindungsgemäße Strahlendetektor weist ein Streustrahlenraster, eine Szintillatoreinheit, eine Detektionseinheit und eine Auswertungseinheit auf. Die Szintillatoreinheit weist das erfindungsgemäße Szintillatorglas als Szintillationsmaterial auf. Als Strahlendetektor soll ein Detektor verstanden werden, mit dem ionisierende Strahlung, beispielsweise Röntgenstrahlen oder Gammastrahlen, detektiert werden können. Der erfindungsgemäße Strahlendetektor teilt die Vorteile des erfindungsgemäßen Szintillatorglases.

Besonders bevorzugt handelt es sich bei dem Strahlendetektor um einen Detektor für Gammastrahlen für ein SPECT-System oder einen Detektor für ein PET-System. Besonders vorteilhaft weist das für einen solchen Strahlendetektor verwendete erfindungsgemäße Szintillatorglas eine hohe Strahlenabsorptionsfähigkeit, eine niedrige Abklingkonstante und eine hohe Konversionseffizienz auf, so dass sich ein derart ausgebildeter Strahlendetektor besonders für ein SPECT-System oder ein PET-System eignet.

Bei dem Strahlendetektor kann es sich auch um einen Röntgendetektor handeln. Vorteilhaft können mit Hilfe der Verwendung des erfindungsgemäßen Szintillatorglases der Herstellungsaufwand und damit die Kosten für die Herstellung eines Röntgendetektors gesenkt werden.

Das erfindungsgemäße Tomographiesystem weist eine Bildaufnahmeeinheit mit einem erfindungsgemäßen Strahlendetektor und eine Steuereinrichtung zum Ansteuern der Bildaufnahmeeinheit auf. Das erfindungsgemäße Tomographiesystem weist vorzugsweise als Bildaufnahmeeinheit ein PET-System oder ein SPECT-System auf. Das erfindungsgemäße Tomographiesystem kann auch ein CT-System oder ein anderes auf Röntgenstrahlen basierendes Tomographiesystem aufweisen. Das erfindungsgemäße Tomographiesystem teilt die Vorteile des erfindungsgemäßen Strahlendetektors.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung des erfindungsgemäßen Verfahrens zur Herstellung von Szintillatorglas umfassen die Ausgangsmaterialien Cercarbonat als Material mit Cer, Bariumcarbonat und Lanthanoxid und/oder Gadoliniumoxid als Röntgenabsorptionsmittel, Magnesiumcarbonat und Lithiumtetraborat als Verflüssigungsmittel und Siliziumoxid als Glasbildner. Cer ist als dreiwertiges Element gut geeignet zur Photonenemission in dem Szintillatorglas. Lithiumtetraborat senkt den Schmelzpunkt bei der Herstellung der Glasschmelze und ist nicht wasserlöslich, was dazu beiträgt, dass sich die Zusammensetzung während des Herstellungsprozesses nicht ändert. Siliziumoxid bildet die Glasmatrix des Szintillatorglases und Lithium, Magnesium und Barium dienen als Verflüssiger. Barium und die Lanthanoide Lanthan und Gadolinium weisen überdies eine hohe Röntgenabsorptionsfähigkeit auf. Die Verwendung von Gadolinium führt zu einem erhöhten Energietransfer der absorbierten Röntgen- oder Gammastrahlung.

In einer bevorzugten Ausgestaltung des erfindungsgemäßen Verfahrens zur Herstellung von Szintillatorglas umfasst der Schritt des Zerkleinerns und Mischens ein Zerkleinern mit ultrahoher Energie. Für das Zerkleinern mit ultrahoher Energie kommt eine Attritormühle zum Einsatz. Bei diesem Prozess entstehen feine sub-µm-Pulverpartikel. Der Schritt des Zerkleinerns und Mischens kann in einer Flüssigkeit, vorzugsweise in Wasser, durchgeführt werden, wodurch eine Pulversuspension erzeugt wird. Das Zerkleinern ermöglicht eine gute Mischbarkeit und Homogenisierung der Ausgangsmaterialien sowie eine niedrige Schmelztemperatur. Die sub-µm-Pulverpartikel ermöglichen das Bilden von amorphen Phasen, welche den Effekt einer mechanischen Legierung aufweisen, d.h. es bilden sich nano-kristalline Strukturen aus einem Gemisch unterschiedlicher Ausgangsmaterialien.

Bevorzugt wird die Rohmaterialpulvermischung durch Gefriertrocknen der Pulversuspension nach dem Zerkleinern und Mischen erzeugt. Dadurch wird eine Verklumpung verhindert, da Wasser als Eis sublimiert, wodurch eine Entmischung verhindert wird und ein homogenes Pulver gewonnen wird.

In einer besonders vorteilhaft anzuwendenden Variante des erfindungsgemäßen Verfahrens zur Herstellung von Szintillatorglas erfolgt der Schmelzvorgang in einer reduzierenden Atmosphäre. Dadurch werden Ce³⁺-Ionen erzeugt, die zur Erzeugung von Licht bei dem Auftreffen von Röntgenstrahlen auf das Szintillatorglas genutzt werden können. Die dabei verwendeten Temperaturen für den Schmelzprozess liegen über 1400°C, vorzugweise kurzzeitig bei 1800°C bis 2100°C.

In einer Ausgestaltung des erfindungsgemäßen Verfahrens zum Herstellen von Szintillatorglas erfolgt das ultraschnelle Abkühlen mit einer Abkühlrate von mehr als 500 K/s (K steht für Kelvin, s für Sekunde). Damit kann eine partielle Kristallisierung vermieden werden. Eine partielle Kristallisierung bringt optische Defekte aufgrund von Streuzentren mit sich. Außerdem kommt es aufgrund der unterschiedlichen Volumina zu inneren Spannungen, die zu einer Destabilisierung des Glases führen können.

In einer Variante des erfindungsgemäßen Verfahrens zum Herstellen von Szintillatorglas erfolgt das ultraschnelle Abkühlen durch Tropfeninjektion in ein Wasser- oder Ölbad. Ein solcher Abkühlprozess lässt sich vergleichsweise leicht realisieren. Wird Öl als Kühlmittel eingesetzt, so kann dessen hohe Wärmekapazität zum schnellen Abkühlen ausgenutzt werden.

Alternativ kann das ultraschnelle Abkühlen auch durch Spritzen der Schmelze auf eine schnell rotierende gekühlte Kupferscheibe erfolgen. Mit einer Kupferscheibe lassen sich extrem hohe Abkühlraten von über 10000 K/s erreichen.

Das Zerkleinern des abgeschreckten Glaspulvers kann ein Hochenergienasszerkleinern, vorzugsweise mit Alkohol als Flüssigkeit, umfassen. Auf diese Weise wird ein feinkörniges und homogenes Pulver mit einer durchschnittlichen Partikelgröße von nur 200nm, das eine hohe Sinter- bzw. thermische Verdichtungsaktivität aufweist, erzeugt.

In einer besonders vorteilhaften Variante des erfindungsgemäßen Verfahrens zum Herstellen von Szintillatorglas erfolgt das Sinterschmieden in einer reduzierend wirkenden Kohlenstoffmatrize und unter Vakuum. Mit einer reduzierend wirkenden Matrize kann Sauerstoff abgefangen und können Oxidationsprozesse verhindert werden. Außerdem ist eine solche Matrize inert gegen die zu verarbeitenden Substanzen und verbindet sich nicht mit diesen. Überdies lässt sich der verarbeitete Werkstoff anschließend leichter aus einer solchen Matrize entfernen. Durch das Sinterschmieden im Vakuum liegen die Poren frei von Gasen, insbesondere Luft, vor und somit wird der Einschluss von Gasen in den Poren während der Verdichtung des Pulverglaspresskörpers verhindert. Diese Gase würden sich ansonsten nach dem Sinterschmieden ausdehnen und unerwünschte große Poren im Endprodukt erzeugen.

Die bei dem erfindungsgemäßen Verfahren als Ausgangsmaterial genutzte Rohmaterialmischung weist bevorzugt ein Mischverhältnis in den folgenden Intervallgrenzen auf:
- 0,5 bis 6 mol% Cercarbonat (Ce₂(CO₃)₃),
- 5 bis 15 mol % Bariumcarbonat (BaCO₃),
- 0 bis 12 mol % Magnesiumcarbonat (MgCO₃),
- 0 bis 25 mol % Lanthanoxid (Ln₂O₃) und/oder Gadoliniumoxid (Gd₂O₃),
- 25 bis 50 mol % Siliziumoxid (SiO₂) und
- 10 bis 25 mol % Lithiumtetraborat (Li₂B₄O₇).

Selbstverständlich müssen die Anteile der einzelnen Ausgangsmaterialien so gewählt werden, dass sich die Prozentzahlen der Anteile insgesamt zu 100 % addieren.

Besonders bevorzugt weist die als Ausgangsmaterial genutzte Rohmaterialmischung folgende Zusammensetzung auf:
- 3 mol % Cercarbonat,
- 10 mol % Bariumcarbonat,
- 10 mol % Magnesiumcarbonat,
- 20 mol % Lanthanidenoxid,
- 40 mol % Siliziumoxid und
- 17 mol % Lithiumtetraborat.

Dabei können als Lanthaniden Lanthan und Gadolinium verwendet werden, wobei die Anteile dieser Lanthaniden durch folgende Summenformel festgelegt wird: xLa₂O₃ + (1-x)Gd₂O₃. Die Variable x kann Werte von 0 bis 1 annehmen.

In einer Ausgestaltung des erfindungsgemäßen Szintillatorglases weist dieses folgende anteilige Glaszusammensetzung auf:
- 0,5 bis 5 mol % Ceroxid (Ce₂O₃),
- 5 bis 15 mol % Bariumoxid (BaO),
- 0 bis 12 mol % Magnesiumoxid (MgO),
- 0 bis 20 mol % Lanthanoxid (La₂O₃) und/oder Gadoliniumoxid (Gd₂O₃),
- 20 bis 40 mol % Siliziumoxid (SiO₂) und
- 10 bis 17,5 mol % Lithiumoxid (Li₂O),
- 20 bis 35 mol % Boroxid (B₂O₃).

Selbstverständlich müssen die Anteile der einzelnen Komponenten innerhalb der genannten Grenzen so gewählt werden, dass sich die Prozentzahlen der Anteile insgesamt zu 100 % addieren.

Weitere bevorzugte Merkmale des erfindungsgemäßen Szintillatorglases sind seine relative Dichte von mehr als 99,9 %. Es liegt nur noch eine geringe Restporosität mit Porendurchmessern von weniger als 200nm, die aus der nicht vollständigen Verdichtung des Glaspulverkörpers während des Heißpressens resultiert, vor. Die Dichte des Endprodukts liegt bei mehr als 4 g/cm³ und hängt im Einzelnen von der jeweiligen anteiligen Zusammensetzung ab. Die Emissionseffizienz des Szintillatorglases liegt bei mehr als 500 Photonen/MeV und kann bis zu 1200 Photonen/MeV erreichen. Die Emissionswellenlänge liegt bei 410 nm bis 425 nm. Die Halbwertsbreite des emittierten Lichts beträgt zwischen 80 und 90 nm. Die primäre Abklingzeit beträgt je nach anteiliger Zusammensetzung 30 bis 40 ns.

Die Erfindung wird im Folgenden unter Hinweis auf die beigefügten Figuren anhand von Ausführungsbeispielen noch einmal näher erläutert. Es zeigen:
FIG 1 ein Flussdiagramm, welches ein Verfahren zum Herstellen von Szintillatorglas gemäß einem Ausführungsbeispiel der Erfindung veranschaulicht,
FIG 2 ein Flussdiagramm, welches den ersten Schritt des in FIG 1 gezeigten Verfahrens im Detail veranschaulicht,
FIG 3 eine schematische Darstellung einer Szintillatorglas-Herstellungseinrichtung,
FIG 4 eine schematische Darstellung eines Röntgendetektors gemäß einem Ausführungsbeispiel der Erfindung,
FIG 5 eine schematische Darstellung eines PET-Systems gemäß einem Ausführungsbeispiel der Erfindung.

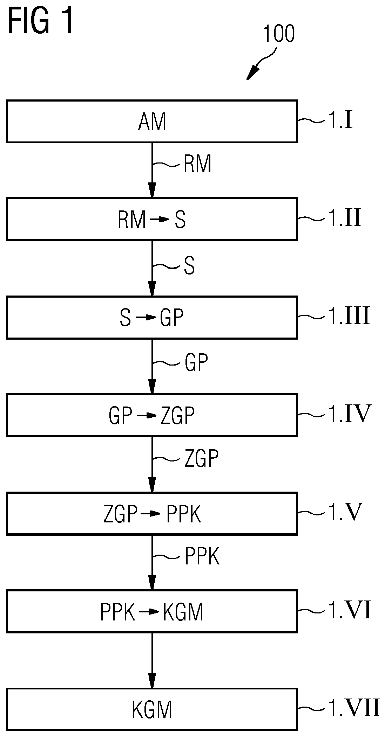

In FIG 1 ist ein Flussdiagramm 100 gezeigt, welches ein Verfahren zum Herstellen von Szintillatorglas gemäß einem Ausführungsbeispiel der Erfindung veranschaulicht.

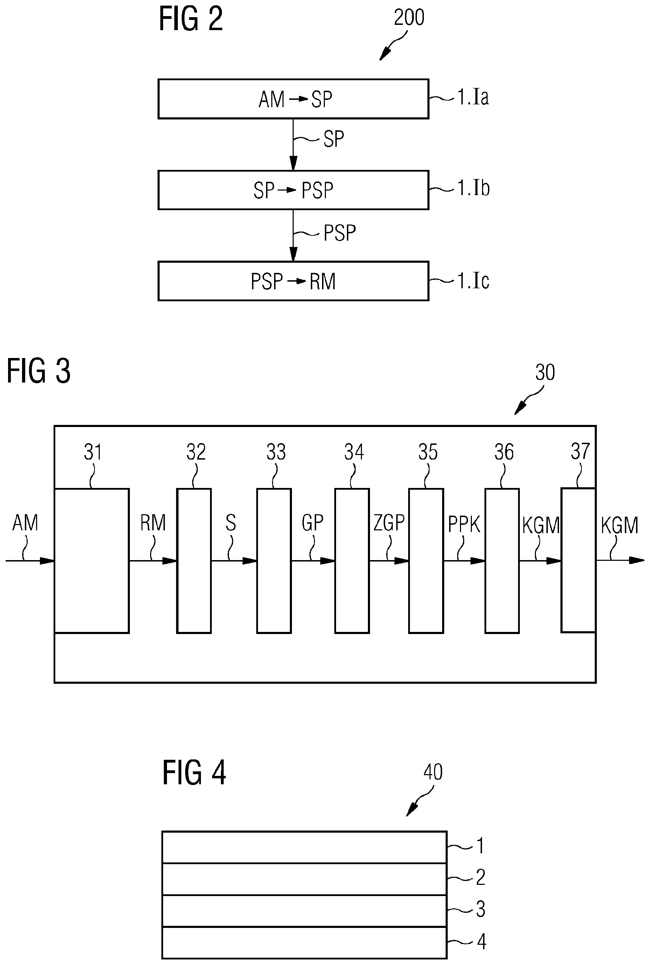

Bei dem Schritt 1.I werden zunächst unterschiedliche Materialien AM in Wasser miteinander gemischt und zerkleinert, so dass eine Pulversuspension entsteht, die durch Trocknung zu einer Rohmaterialmischung RM verarbeitet wird. Die Vorgehensweise zur Erzeugung der Rohmaterialmischung RM wird im Zusammenhang mit FIG 2 erläutert. Als Ausgangsmaterialien AM werden in dem veranschaulichten Ausführungsbeispiel Cercarbonat (Ce₂(CO₃)₃), Bariumcarbonat (BaCO₃), Magnesiumcarbonat (MgCO₃), Lanthanoxid (La₂O₃), Gadoliniumoxid (Gd₂O₃) Siliziumoxid (SiO₂) und Lithiumtetraborat (Li₂B₄O₇) verwendet. Die Anteile in mol% betragen beispielsweise 3 mol% Ce₂(CO₃)₂, 10 mol% BaCO₃, 10 mol% MgCo₃, 20 mol% La₂O₃, 40 mol% SiO₂ und 17 mol% Li₂B₄O₇. Cercarbonat stellt zunächst dreiwertige Cer-Ionen zur Verfügung, die während des Herstellungsverfahrens durch Zerfall des Cercarbonats vierwertig werden und wieder zu dreiwertigen Cer-Ionen reduziert werden. Dreiwertige Cer-Ionen eignen sich als Aktivatorzentren in Szintillatormaterialien. Bariumcarbonat und Lanthanoxid dienen als Röntgenabsorptionsmittel. Magnesiumcarbonat und Lithiumtetraborat werden als Verflüssigungsmittel für die Erzeugung einer Schmelze genutzt. Siliziumoxid dient als Glasbildner. Der Zerkleinerungsprozess erfolgt durch Ultrahochenergiezerkleinern, so dass ein Pulver mit Partikeln, welche kleiner sind als 1 µm und einen hohen Volumenanteil an amorphen Phasen aufweisen, die einen mechanischen Legierungseffekt haben, erzeugt wird.

Bei dem Schritt 1.II wird aus dem Rohmaterial RM eine Schmelze S erzeugt. Hierzu wird die Rohmaterialpulvermischung RM bei etwa 1400 °C - 2100°C in reduzierender Atmosphäre geschmolzen, um dreiwertige Ce³⁺-Ionen zu erzeugen.

Anschließend wird bei dem Schritt 1.III die erzeugte Schmelze S ultraschnell, d.h. mit einer Kühlrate von mehr als 500 K/s abgekühlt, um eine teilweise Kristallisation innerhalb der erzeugten Glasschmelze S zu verhindern. Bei diesem Schritt wird eine Art Glaspulver GP erzeugt. Der Abkühlungsprozess kann durch Tropfeninjektion in ein Wasser- oder Ölbad erfolgen oder durch das Spritzen des Pulvers auf eine schnell rotierende gekühlte Kupferscheibe.

Nachfolgend wird bei dem Schritt 1.IV das Glaspulver GP mit einem Hochenergiezerkleinerungsprozess zerkleinert. Dieser Prozess findet vorzugsweise unter Zugabe von Alkohol statt. Auf diese Weise wird ein feinkörniges und homogenes Pulver ZGP mit einer durchschnittlichen Partikelgröße von etwa 200nm erzeugt.

Das feinkörnige Pulver ZGP wird bei dem Schritt 1.V verdichtet bis zu einer durchschnittlichen Dichte von 50%, so dass ein Glaspulverpresskörper PPK entsteht.

Weiterhin erfolgt bei dem Schritt 1.VI ein Sinterschmieden des Glaspulverpresskörpers PPK, bei dem das Pulver in einer kohlenstoffhaltigen Matrize unter Vakuum in einer Heißpresse bei einem einachsigen Druck von 5 bis 50 MPa auf Temperaturen von 1200 - 1500 °C für eine Stunde erhitzt wird und anschließend so schnell wie möglich abgekühlt wird. Schließlich erfolgt bei dem Schritt 1.VII noch ein Tempern des erzeugten kompakten Glasmaterials KGM.

Bei diesem Prozess wird ein kompaktes Glasmaterial KGM erzeugt, welches anschließend noch in geeignete Formen für die Anwendung in einem Röntgendetektor geschnitten werden muss.

In FIG 2 ist ein Flussdiagramm 200 gezeigt, mit dem Teilschritte des in FIG 1 veranschaulichten Schritts 1.I im Detail gezeigt werden. Bei dem Teilschritt 1.Ia wird zunächst aus den Ausgangsmaterialien AM eine Suspension SP erzeugt, wofür die Ausgangsmaterialien AM in Wasser gegeben werden.

Anschließend wird bei dem Teilschritt 1.Ib die Suspension SP durch einen Hochenergiezerkleinerungsprozess in Sub-µm-Pulverpartikel PSP zerkleinert. Die feinkörnige Suspension PSP wird schließlich bei dem Teilschritt 1.Ic einem Gefriertrockungsprozess unterworfen. Durch den Gefriertrocknungsprozess wird eine Entmischung und ein Verklumpen des erzeugten Rohmaterials RM verhindert, um ein homogenes Pulver zu erzeugen.

In der nachfolgenden Tabelle sind einzelne Parameterwerte für drei unterschiedliche Ausführungsbeispiele A1, A2 und A3 veranschaulicht:

| Parameter | A1 | A2 | A3 |
|---|---|---|---|
| nSiO₂[mol%] | 40 | 44 | 37 |
| nLi₂B₄O₇ [mol%] | 17 | 20 | 25 |
| nMgO [mol%] | 10 | 8 | 5 |
| nBaO [mol%] | 10 | 15 | 15 |
| nLn₂O₃ [mol%] mit Ln₂O₃ = xLa₂O₃+ (1-x)Gd₂O₃ | 20 | 8 | 14 |
| x | 0,5 | 0,8 | 0,3 |
| nCe₂O₃ [mol%] | 3 | 5 | 4 |
| rel. Dichte (%) | 99, 94 | 99,98 | 99,95 |
| spez. Dichte [g/cm³] | 4,8 | 4,3 | 4,5 |
| Effizienz [ph/MeV] | ∼1200 | ∼950 | ∼800 |
| Emissionswellenlänge [nm] | 415 | 410 | 420 |
| Primäre Abklingkonstante [ns] | 40 | 33 | 35 |

In der Tabelle sind für die einzelnen Ausführungsbeispiele A1, A2, A3 die Anteile unterschiedlicher Materialien des Szintillationsglases in mol% angegeben. Die jeweiligen Komponenten sind als Oxide angegeben. Dabei ist anzumerken, dass die Ausgangsmaterialien für Magnesiumoxid, Bariumoxid und Ceroxid jeweils Carbonate sind.

Als Ln₂O₃ soll hier allgemein ein Lanthanidenoxid bezeichnet werden, das sich aus 1-x Anteilen Gadoliniumoxid und x Anteilen Lanthanoxid zusammensetzt. Dabei liegt x zwischen 0 und 1.

Weiterhin ist für die drei Ausführungsbeispiele jeweils die relative Dichte angegeben. Diese gibt an, inwieweit noch eine geringe Restporosität in dem Endprodukt vorhanden ist. Zudem ist in der Tabelle auch die spezifische Dichte des Szintillationsglases für das jeweilige Ausführungsbeispiel genannt. Diese Dichte variiert zwischen 4,3 und 4,8 g/cm³ je nach anteiliger Zusammensetzung. Weiterhin ist in der Tabelle auch die Emissionseffizienz des jeweiligen Szintillatorglases angegeben. Hier liegen die Werte zwischen 800 und 1200 Photonen/MeV. Zudem sind jeweils die Emissionswellenlänge und die primäre Abklingkonstante des jeweiligen Szintillatorglases angegeben.

In FIG 3 ist eine schematische Darstellung einer Herstellungseinrichtung 30 zum Herstellen eines Szintillationsglases gemäß einem Ausführungsbeispiel der Erfindung veranschaulicht. Die Herstellungseinrichtung 30 umfasst eine Mischungseinheit 31. Die Mischungseinheit 31 empfängt die Ausgangsmaterialien AM, welche zum Beispiel die Karbonate Bariumcarbonat, Magnesiumcarbonat und Cercarbonat und die Oxidmischung Lanthanoxid und Gadoliniumoxid, Siliziumoxid und Lithiumtetraborat umfassen. Die Ausgangsmaterialien werden in der Mischungseinheit 31 zerkleinert und gemischt. Das dabei entstehende Rohmaterial RM wird anschließend an eine Schmelzeinheit 32 übermittelt. Die Schmelzeinheit 32 erzeugt aus der Rohmaterialpulvermischung eine Schmelze S. Die Schmelze S wird an eine Abkühleinheit 33 übermittelt, welche durch ultraschnelles Abkühlen von mehr als 500 K/s aus der Schmelze S ein abgeschrecktes Glaspulver GP erzeugt. Das abgeschreckte Glaspulver GP wird an eine Pulverisierungseinheit 34 übermittelt, welche das abgeschreckte Glaspulver GP zerkleinert. Das zerkleinerte Glaspulver ZGP wird an eine Kompressionseinheit 35 übermittelt, die durch Verpressen aus dem zerkleinerten Glaspulver einen Pulverpresskörper PPK erzeugt. Dabei wird ein Material mit etwa 50% relativer Dichte erzeugt. Der Pulverpresskörper PPK wird an eine Sintereinheit 36 weitergegeben, die aus dem Pulverpresskörper durch Sinterschmieden kompaktes Glasmaterial KGM mit einer relativen Dichte von mehr als 99,9 % erzeugt. Schließlich wird das kompakte Glasmaterial KGM in einer Tempereinheit 37 noch durch einen Temperschritt nachbehandelt. Das so erhaltene Endprodukt KGM kann an eine Schneidemaschine (nicht gezeigt) weitergegeben werden, mit der Rohlinge für Szintillatordetektoren zurechtgeschnitten werden.

In FIG 4 ist eine schematische Darstellung eines Röntgendetektors 40 gemäße einem Ausführungsbeispiel der Erfindung gezeigt. Der Röntgendetektor 40 umfasst ein Streustrahlgitter 1, mit dem auf den Röntgendetektor auftretende Röntgenstrahlung kollimiert werden kann. Die homogenisierte Strahlung trifft auf eine Szintillatorschicht 2, in der die Ce³⁺-Ionen von der Röntgenstrahlung zur Lichtemission angeregt werden. Das erzeugt Licht wird in einer Detektionsschicht 3 von einer Mehrzahl von Photomultipliern in elektrische Impulse umgewandelt und verstärkt. Die elektrischen Impulse werden schließlich in einer Auswertungseinheit 4, welche beispielsweise Komparatoren als elektronische Bauelemente umfasst, analysiert.

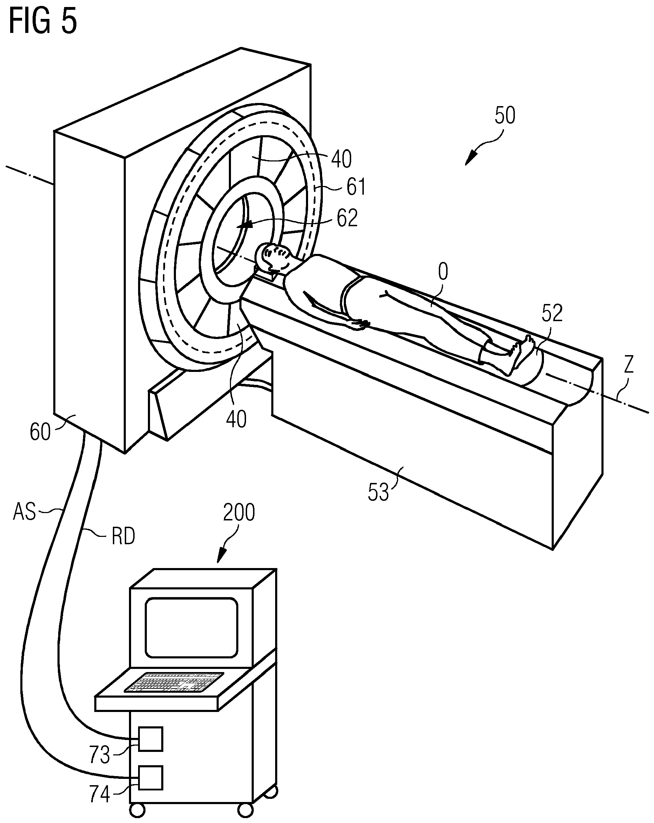

In FIG 5 ist ein PET-System 50 mit einer Mehrzahl von kreisförmig angeordneten Strahlendetektoren 40 gemäß einem Ausführungsbeispiel der Erfindung dargestellt. Das PET-System 50 wird zur Aufnahme von Rohdaten RD von einem Untersuchungsbereich eines Patienten O verwendet.

Ein PET-System verwendet Radionuklide, die Positronen emittieren. Hierfür wird dem Patienten O zu Beginn einer PET-Untersuchung ein Radiopharmakon verabreicht, meist durch Injektion in eine Armvene. Bei der Wechselwirkung der Positronen mit einem Elektron im Körper des Patienten werden zwei hochenergetische Photonen mit 511 keV, d.h. Gammastrahlung, in genau entgegengesetzte Richtungen zueinander ausgesandt. Das PET-System 50 weist daher kreisförmig angeordnete, einander gegenüberliegende Strahlendetektoren 40 auf, die diese Gammastrahlen detektieren. Das Prinzip der PET-Untersuchung besteht darin, Koinzidenzen zwischen je zwei gegenüberliegenden Detektoren 40 aufzuzeichnen. Aus der zeitlichen und räumlichen Verteilung dieser registrierten Zerfallsereignisse wird auf die räumliche Verteilung des Radiopharmakons im Körperinneren des Patienten O geschlossen und eine Serie von Schnittbildern errechnet.

Das PET-System 50 besteht dabei im Wesentlichen aus einer Scaneinheit 60, in welcher an einer Gantry 61 eine Rohdatenakquisitionseinheit mit gegenüberliegenden Strahlendetektoren 40 um einen Messraum 62 angeordnet ist. Vor der Scaneinheit 50 befindet sich eine Patientenlagerungseinrichtung 53 bzw. ein Patiententisch 53, dessen oberer Teil 52 mit einem darauf befindlichen Patienten O zu der Scaneinheit 60 verschoben werden kann, um den Patienten O durch den Messraum 62 hindurch relativ zum Detektorsystem 40 zu bewegen. Angesteuert werden die Scaneinheit 60 und der Patiententisch 53 durch eine Steuerungseinrichtung 200, von der aus über eine übliche Steuerschnittstelle 74 Akquisitionssteuersignale AS kommen, um das gesamte System gemäß vorgegebener Messprotokolle in der herkömmlichen Weise anzusteuern. Durch die Bewegung des Patienten O entlang der z-Richtung, welche der Systemachse z längs durch den Messraum 62 entspricht, und die Aufnahme der kreisförmig angeordneten Strahlendetektoren 40 kann ein zu untersuchendes Volumen erfasst werden. Dabei werden von den Strahlendetektoren 40 Rohdaten RD erfasst, die dann zur Rekonstruktion von Volumen- und/oder Schicht-Bilddaten genutzt werden. Es werden also an der betreffenden z-Position die erforderlichen Rohdaten RD erfasst, um ein Schnittbild an dieser z-Position zu rekonstruieren oder um aus den Rohdaten mehrerer z-Positionen Volumenbilddaten zu rekonstruieren. Der erfindungsgemäße Strahlendetektor 40 ist grundsätzlich auch an anderen Tomographie-Systemen, wie zum Beispiel einem CT-System oder einem SPECT-System, einsetzbar.

Die von den Detektoren 40 akquirierten Rohdatensätze RD von einem Untersuchungsbereich des Patienten O werden über eine Rohdatenschnittstelle 73 an die Steuerungseinrichtung 200 übergeben. Diese Rohdatensätze RD werden dann für eine Bildrekonstruktion genutzt. Die dabei erzeugten Bilddaten können dann in einer Speichereinrichtung abgespeichert werden oder auf einem Bildschirm des PET-Systems 50 angezeigt werden.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zur Herstellung von Szintillatorglas (2), aufweisend die Schritte:
- Erzeugen einer Rohmaterialpulvermischung (RM) durch Zerkleinern und Mischen folgender Ausgangsmaterialien (AM):
- einer Verbindung mit Cer,
- eines Verflüssigungsmittels,
- eines Materials mit hoher Röntgenabsorption und
- eines Glasbildners,
- Erzeugen einer Schmelze (S) durch Schmelzen der Rohmaterialpulvermischung (RM),
- Erzeugen von abgeschrecktem Glaspulver (GP) durch ultraschnelles Abkühlen der erzeugten Schmelze (S),
- Zerkleinern des abgeschreckten Glaspulvers (GP),
- Verpressen des zerkleinerten Glaspulvers (ZGP) zu einem Pulverpresskörper (PPK),
- Erzeugen eines kompakten Glasmaterials (KGM) durch Sinterschmieden des Pulverpresskörpers (PPK),
- Tempern des kompakten Glasmaterials (KGM).

2. Verfahren zur Herstellung von Szintillatorglas (2) nach Anspruch 1, wobei die Ausgangsmaterialen (AM) umfassen:
- Cercarbonat als Material mit Cer,
- Bariumcarbonat und Lanthanoxid und/oder Gadoliniumoxid als Röntgenabsorptionsmittel,
- Magnesiumcarbonat und Lithiumtetraborat als Verflüssigungsmittel und
- Siliziumoxid als Glasbildner.

3. Verfahren nach Anspruch 1 oder 2, wobei der Schritt des Zerkleinerns und Mischens ein Zerkleinern mit ultrahoher Energie umfasst.

4. Verfahren nach einem der vorstehenden Ansprüche, wobei der Schritt des Zerkleinern und Mischens in einer Flüssigkeit, vorzugsweise in Wasser, durchgeführt wird, wodurch eine Pulversuspension erzeugt wird.

5. Verfahren nach Anspruch 4, wobei die Rohmaterialpulvermischung durch Gefriertrocknen der Pulversuspension nach dem Zerkleinern und Mischen erzeugt wird.

6. Verfahren nach einem der vorstehenden Ansprüche, wobei der Schmelzvorgang in einer reduzierenden Atmosphäre erfolgt.

7. Verfahren nach einem der vorstehenden Ansprüche, wobei das ultraschnelle Abkühlen mit einer Abkühlrate von mehr als 500 K/s erfolgt.

8. Verfahren nach einem der vorstehenden Ansprüche, wobei das ultraschnelle Abkühlen durch Tropfeninjektion in ein Wasser-oder Ölbad erfolgt.

9. Verfahren nach einem der Ansprüche 1 bis 8, wobei das ultraschnelle Abkühlen durch Spritzen der Schmelze auf eine schnell rotierende gekühlte Kupferscheibe erfolgt.

10. Verfahren nach einem der vorstehenden Ansprüche 1 bis 9, wobei das Zerkleinern des abgeschreckten Glaspulvers ein Hochenergienasszerkleinern, vorzugsweise mit Alkohol als Flüssigkeit umfasst.

11. Verfahren nach einem der vorstehenden Ansprüche, wobei das Sinterschmieden in einer reduzierend wirkenden Kohlenstoffmatrize erfolgt.

12. Verfahren nach einem der vorstehenden Ansprüche, wobei die anorganische Rohmaterialmischung ein Mischverhältnis mit folgenden Intervallwerten aufweist:
- 0,5 bis 6 mol % Cercarbonat,
- 5 bis 15 mol % Bariumcarbonat,
- 0 bis 12 mol % Magnesiumcarbonat,
- 0 bis 25 mol % Lanthanoxid und/oder Gadoliniumoxid,
- 25 bis 50 mol % Siliziumoxid und
- 10 bis 25 mol % Lithiumtetraborat.

13. Verfahren nach einem der vorstehenden Ansprüche, wobei die Rohmaterialmischung folgendes Mischverhältnis aufweist:
- 3 mol % Cercarbonat,
- 10 mol % Bariumcarbonat,
- 10 mol % Magnesiumcarbonat,
- 20 mol % Lanthanidenoxid als Lanthanoxid und/oder Gadoliniumoxid,
- 40 mol % Siliziumoxid und
- 17 mol % Lithiumtetraborat.

14. Szintillatorglas-Herstellungseinrichtung (30), aufweisend:
- eine Mischungseinheit (31) zum Erzeugen einer Rohmaterialpulvermischung (RM) durch Zerkleinern und Mischen folgender anorganischer Ausgangsmaterialien (AM):
- einer Verbindung mit Cer,
- eines Verflüssigungsmittels,
- eines Materials mit hoher Röntgenabsorption und
- eines Glasbildners,
- eine Schmelzeinheit (32) zum Erzeugen einer Schmelze (S) durch Schmelzen der Rohmaterialpulvermischung (RM),
- eine Abkühleinheit (33) zum Erzeugen von abgeschrecktem Glaspulver (GP) durch ultraschnelles Abkühlen der erzeugten Schmelze (S),
- eine Pulverisierungseinheit (34) zum Zerkleinern des abgeschreckten Glaspulvers (GP),
- eine Kompressionseinheit (35) zum Verpressen des zerkleinerten Glaspulvers (ZGP),
- eine Sintereinheit (36) zum Erzeugen eines kompakten Glasmaterials (KGM) durch Sinterschmieden des verpressten Glaspulvers (KGP),
- eine Tempereinheit zum Tempern des kompakten Glasmaterials (KGM).

15. Szintillatorglas (2), aufweisend die folgende Glaszusammensetzung:
- 0,5 bis 5 mol % Ceroxid (Ce₂O₃),
- 5 bis 15 mol % Bariumoxid (BaO),
- 0 bis 12 mol % Magnesiumoxid (MgO),
- 0 bis 20 mol % Lanthanoxid (La₂O₃) und/oder Gadoliniumoxid (Gd₂O₃),
- 20 bis 40 mol % Siliziumoxid (SiO₂) und
- 10 bis 17,5 mol % Lithiumoxid (Li₂O),
- 20 bis 35 mol % Boroxid (B₂O₃).

16. Strahlendetektor (40), aufweisend:
- eine Szintillationsschicht (2), welche Szintillatorglas nach Anspruch 15 aufweist,
- eine Detektionseinheit (3) zum Umsetzen des von der Szintillationsschicht (2) emittierten Lichts in elektronische Signale,
- eine Auswertungseinheit (4) zum Auswerten der elektronischen Signale der Detektionseinheit (3).

17. Tomographiesystem (50), aufweisend:
- eine Bildaufnahmeeinheit (61) mit einem Strahlendetektor (40) nach Anspruch 16,
- eine Steuereinrichtung (200) zum Ansteuern der Bildaufnahmeeinheit (61).
